# EUROPEAN PATENT SPECIFICATION

(11) **EP 3 464 032 B1**
(45) Date of publication and mention of the grant of the patent: **24.03.2021**
(21) Application number: 17803161.3
(22) Date of filing: 08.05.2017
(51) Int. Cl.: B62D 25/16

(54) **AN ATTACHMENT ASSEMBLY FOR MOUNTING A MUDGUARD AND A MUDGUARD ASSEMBLY**
BEFESTIGUNGSANORDNUNG ZUR MONTAGE EINES KOTFLÜGELS UND KOTFLÜGELANORDNUNG
ENSEMBLE D'ATTACHEMENT POUR MONTER UN GARDE-BOUE ET ENSEMBLE GARDE-BOUE

(30) Priority: 26.05.2016 SE 1650728
(43) Date of publication of application: 10.04.2019
(73) Proprietor: Scania CV AB, 151 87 Södertälje (SE)
(72) Inventor: KARLSSON, Pär, 611 67 Nyköping (SE); KVALDÉN, Daniel, 647 92 Mariefred (SE)
(74) Representative: Scania CV AB
(86) International application number: PCT/SE2017/050456
(87) International publication number: WO 2017/204715

(56) References cited:
- EP-A1- 1 209 067
- EP-A2- 0 905 009
- EP-A2- 1 564 115
- GB-A- 2 181 396
- US-A1- 2004 004 351
- US-B1- 8 668 227

## Description

### TECHNICAL FIELD OF THE INVENTION

The present invention relates to an attachment assembly for mounting a mudguard to a frame of a motor vehicle according to the preamble of claim 1. In particular, but not exclusively, the invention relates to such an attachment assembly intended for a heavy motor vehicle, such as a truck. The invention also relates to a mudguard assembly and to a motor vehicle.

### BACKGROUND AND PRIOR ART

Mudguards are used on motor vehicles for protection against propelling rocks and other road debris. In particular, this is important for heavy vehicles, such as trucks, wherein mudguards protect on one hand the underside of the motor vehicle itself and e.g. a trailer or semitrailer coupled to the truck, and on the other hand vehicles travelling behind the motor vehicle. The design and the position of the mudguards are generally regulated by law, and are also limited by the configuration of a bodywork of the vehicle and surrounding components, such as air and fuel tanks. Depending on whether the truck is provided with leaf spring suspension or air spring suspension, different regulations may apply to the shape and position of the mudguard with respect to the tire. Thus, wheel radius and different combinations of axle and suspension have a large influence on the position of the mudguard, in particular in the vertical direction.

The limitations imposed by the bodywork and the surrounding components also mainly apply in the vertical direction. The mudguards are often located under the bodywork and the distance between the bodywork and the frame of the motor vehicle therefore directly relates to the vertical positioning of the mudguard.

Due to the number of factors influencing the vertical position of the mudguard, it is difficult to achieve a standardised solution which may be easily and efficiently mounted in an assembly line. Instead, the mudguards are often mounted after assembly of the truck and adapted to the individual truck. However, this is less efficient than mounting the components in-line, and it is therefore desirable to achieve a solution which allows adaptation of the vertical position of the mudguard after assembly.

US20040004351 discloses a mudguard having a vertically adjustable attachment assembly comprising an arm extending between the mudguard and the frame of the motor vehicle, an arm attachment device attaching the arm to the frame of the motor vehicle, and a mudguard fixation device connecting the mudguard to the arm. The arm attachment device can be adjusted in the vertical direction so that the vertical position of the mudguard is altered. However, this solution is not suitable for all types of heavy motor vehicles, and it is therefore desirable to find an alternative solution.

### SUMMARY OF THE INVENTION

It is a primary objective of the present invention to achieve a vertically adjustable attachment of a mudguard to the frame of a motor vehicle which is in at least some aspect improved with respect to prior solutions. In particular, it is an objective to achieve a stable attachment by means of which the mudguards can be fitted to the motor vehicle during assembly in-line, and thereafter be vertically adjusted and thereby adapted to the requirements on that particular motor vehicle.

At least the primary objective is achieved by means of the initially defined attachment assembly, wherein the mudguard fixation device is configured to attach the mudguard to the arm in one of at least two predefined mudguard fixation positions, wherein the predefined mudguard fixation positions are at vertically different levels with respect to the arm. The attachment assembly according to the invention thus offers at least four different available vertical positions of the mudguard with respect to the frame of the vehicle, of which at least two positions can be achieved by altering the arm position in which the arm is attached to the frame of the motor vehicle, and at least two positions can be achieved by attaching the mudguard to the arm in one of at least two mudguard fixation positions. Since the positions are predefined, the mudguard is firmly and stably attached in each one of the positions. Of course, it is also possible to provide more than four predefined vertical positions, e.g. five or six predefined vertical positions.

According to one embodiment of the invention, the mudguard fixation device comprises
- a bracket configured to be firmly attached to the mudguard, and
- an arm securing member configured to secure the arm in one of said at least two mudguard fixation positions within the bracket.

In this way, adjustment of the vertical position of the mudguard can be easily achieved by altering the position of the arm with respect to the bracket, without having to modify the mudguard itself in some way. The bracket is always securely attached to the mudguard and does not have to be removed when adjusting the vertical position of the mudguard, so that the wear on the mudguard arising from adjustment of the vertical position is minimised.

The arm securing member is preferably configured to be secured to the bracket by mechanical fastening means, such as screws, bolts, clamps, or similar. The arm is preferably provided with a mark in the form of e.g. a notch, a ridge or a hole, defining a portion of the arm which is to be received in the mudguard fixation position. This facilitates mounting and contributes to a stable attachment of the mudguard to the arm.

According to one embodiment of the invention, the bracket comprises two elongated portions extending at an angle with respect to one another, and a corner portion located between said elongated portions, wherein the corner portion is configured to receive the arm in one of said at least two mudguard fixation positions. This allows a stable and space efficient mounting.

According to one embodiment of the invention, the bracket comprises at least one protruding shelf configured to receive the arm in one of said at least two mudguard fixation positions. Thus, stability is achieved in this mudguard fixation position.

According to one embodiment of the invention, the arm securing member is in the form of a spacer configured to, together with the arm, be fitted between the protruding shelf and the corner portion of the bracket. Thus, the vertical position can be adjusted by letting the arm and the spacer switch places within the bracket. In one position, the arm is positioned above the spacer, and in another position, the arm is positioned below the spacer. The spacer enables easy adjustment of the vertical position of the mudguard.

According to one embodiment of the invention, the arm attachment device comprises
- a frame attachment member configured to be firmly attached to the frame of the vehicle, and
- an arm connector for connecting the arm to the frame attachment member in one of said at least two available arm positions.

In this embodiment, there is no need to remove the frame attachment member from the frame to adjust the position of the mudguard. The frame attachment member is fixed with respect to the frame of the vehicle, and the position of the arm with respect to the frame attachment member is altered. This can be achieved either by providing an arm connector having several possibilities for receiving the arm when mounted to the frame attachment member, or by providing an arm connector that can be mounted in different ways with respect to the frame attachment member, each different way corresponding to an arm position.

Preferably, the arm connector is configured to be secured to the frame attachment member by mechanical fastening means, such as by screws, bolts, clamps or similar.

According to one embodiment of the invention, the arm connector is configured to be secured to the frame attachment member in one of at least two predefined connector positions, each connector position corresponding to one of said arm positions. By providing predefined connector positions, adjustment of the vertical position of the arm is facilitated. Predefined positions can be achieved e.g. by providing surface structures configured to engage or interlock when in a particular position.

According to one embodiment of the invention, said predefined connector positions correspond to different orientations of the arm connector with respect to the frame attachment member. Thus, no additional holes which are not used for the mounting are needed, and thus the risk of confusion during assembly is minimised. Furthermore, surface treatment of the components is simplified. The predefined connector positions can in this case be one position in which the arm is received in the arm connector in a position vertically above the frame attachment member, and one position in which the arm is received in the arm connector in a position vertically below the frame attachment member. Thus, the arm connector is configured such that it, in each connector position, only has one available arm position.

According to one embodiment of the invention, the arm is curved and has two sections extending in parallel or essentially in parallel, and a mid-section connecting said two sections and extending at an angle with respect to said sections. A curved arm gives a more stable attachment assembly than a straight arm. The two parallel sections can be an inner section for fastening to the arm attachment device and an outer section for fastening to the mudguard fixation device.

According to one embodiment of the invention, the arm has the same orientation when held in the at least two different arm positions. In this way, a horizontal position of the mudguard, in particular in the longitudinal direction of the motor vehicle, is not automatically altered when the vertical position is changed. It is therefore possible to isolate vertical adjustment.

According to one embodiment of the invention, the arm, when mounted, is configured to extend away from the frame in a lateral direction, so that the at least one mudguard fixation device is laterally spaced apart from the arm attachment device. A stable support can thereby be achieved for the mudguard since several points of contact or one long line of contact can be provided along the lateral extension of the arm. The lateral direction is defined as perpendicular to the longitudinal direction of the motor vehicle and the vertical direction.

According to one embodiment of the invention, the arm is configured to be received in said at least one mudguard fixation device in one of at least two laterally spaced apart predefined receiving positions. The arm thus comprises notches, ridges, holes or other marks that define the receiving positions. Since the receiving positions are laterally spaced apart, the mudguard can be moved between a position closer to the frame of the vehicle and a position further away from the frame. Requirements on the width of motor vehicles vary in different jurisdictions and it is therefore useful to be able to adjust the lateral position of the mudguards depending on the present requirements. It is of course possible to include more than two receiving positions per mudguard fixation device.

In one embodiment, the predefined receiving positions are defined by holes, which holes are also used for fastening the arm to the mudguard fixation device using fastening means, e.g. in the form of screws.

According to one embodiment of the invention, the attachment assembly comprises at least two mudguard fixation devices. The two mudguard fixation devices are preferably positioned spaced apart and thereby provide stable support for the mudguard. In this case, the arm may comprise four predefined receiving positions, i.e. two predefined positions per mudguard fixation device.

According to another aspect, the invention relates to a mudguard assembly comprising a mudguard and at least two of the proposed attachment assemblies. Advantages and advantageous features appear from the above discussion of the proposed attachment assembly. Preferably, the mudguard fixation device is attached to a wheel-facing surface of the mudguard.

According to another aspect, the invention relates to a motor vehicle comprising the proposed mudguard assembly.

Other advantageous features as well as advantages of the present invention will appear from the following description.

### BRIEF DESCRIPTION OF THE DRAWINGS

The invention will in the following be further described by means of example with reference to the appended drawings, wherein
- Fig. 1: schematically shows a wheel of a motor vehicle and a mudguard assembly according to an embodiment of the invention,
- Fig. 2: shows the mudguard assembly shown in fig. 1,
- Fig. 3: shows a detail of the mudguard assembly in fig. 2,
- Figs. 4a-b: show side views of a mudguard fixation device according to an embodiment of the invention in two different positions,
- Figs. 5a-b: show side views of a mudguard fixation device according to another embodiment of the invention in two different positions,
- Figs. 6a-b: show side views of an arm attachment device according to an embodiment of the invention in two different positions, and
- Fig. 7: shows four different vertical positions of the mudguard shown in fig. 1.

### DETAILED DESCRIPTION OF EMBODIMENTS OF THE INVENTION

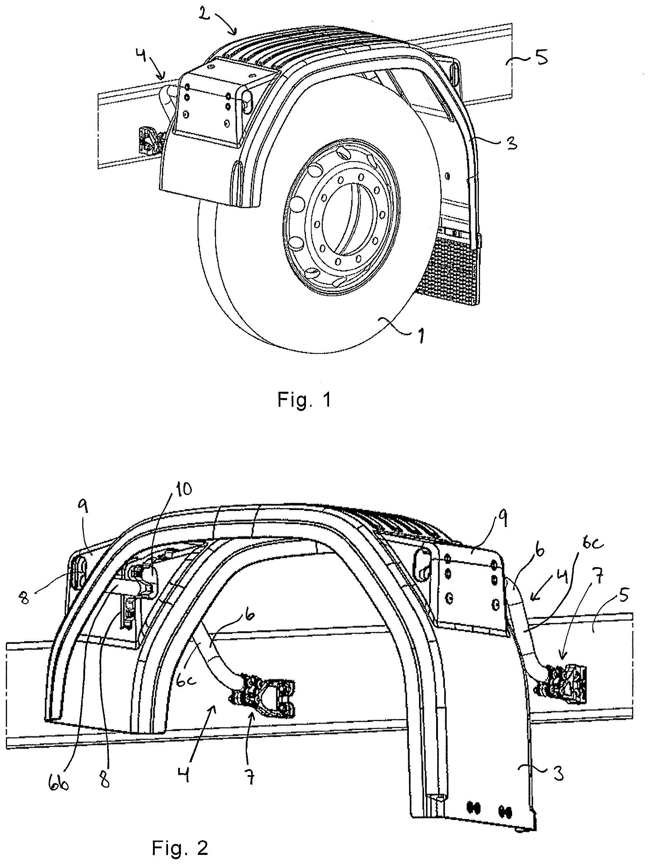

A wheel 1 of a motor vehicle and a mudguard assembly 2 according to an embodiment of the invention are schematically shown in fig. 1. The mudguard assembly 2 comprises a mudguard 3 positioned vertically above the wheel 1, and two identical attachment assemblies 4 attaching the mudguard to a frame 5 of the motor vehicle. As can be seen from fig. 2, each one of the attachment assemblies consists of an arm 6 extending between the frame 5 of the motor vehicle and the mudguard 3, an arm attachment device 7 configured to attach the arm 6 to the frame 5, and two laterally spaced apart mudguard fixation devices 8, configured to attach the mudguard 3 to the arm 6. The mudguard fixation devices 8 are located in a protruding portion 9 of the mudguard 3.

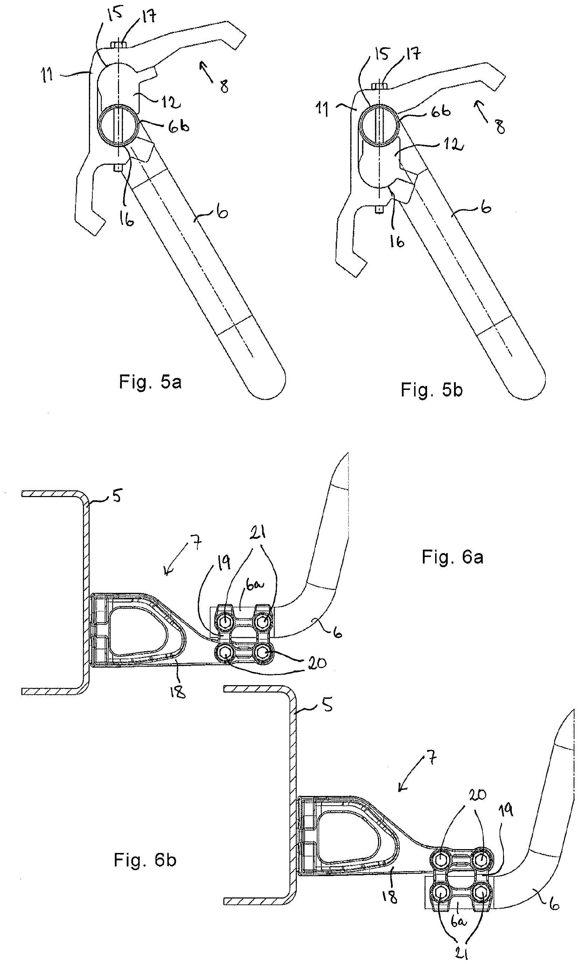

The arm 6 is a hollow and curved tube, having an inner section 6a (see fig. 6a) connected to the arm attachment device 7 and an outer section 6b, parallel with the inner section 6a and connected to the mudguard fixation device 8. A mid-section 6c extending at an angle with respect to the inner and outer sections 6a, 6b connects said two sections 6a, 6b. The arm 6 extends away from the frame 5 in a lateral direction, so that the mudguard fixation devices 8 are laterally spaced apart from the frame attachment member 7. The mudguard 3 has a through-hole 10 provided in the protruding portion 9 of the mudguard 3, through which the outer section 6b of the arm 6 extends so that the outer section 6b of the arm 6 is located between the mudguard 3 and the wheel 1. Here, the arm 6 has a circular cross section, but other shapes are possible, such as a polygonal or rounded cross section.

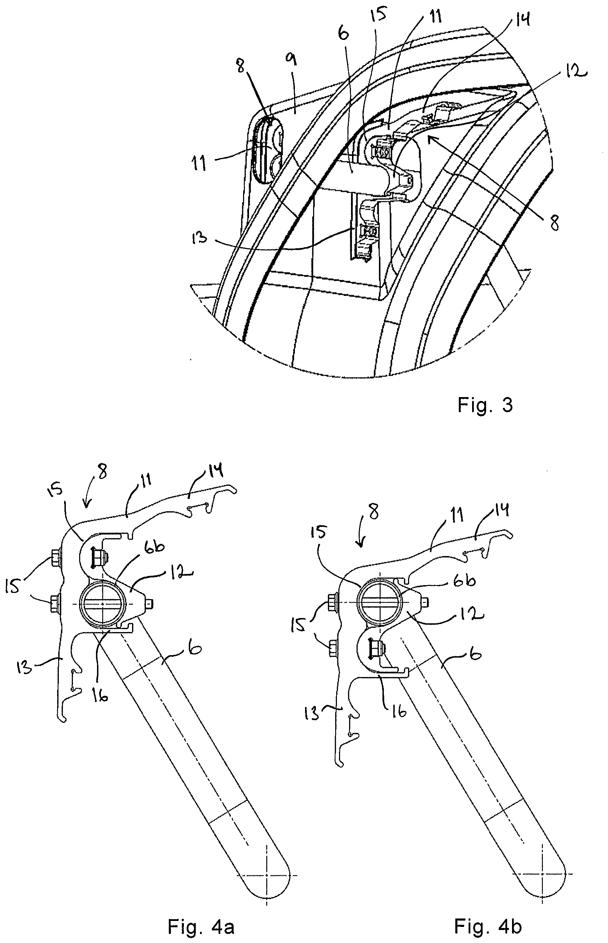

Figs. 3 and 4a-b show the mudguard fixation device 8 according to a first embodiment of the invention in greater detail. The mudguard fixation device 8 comprises on one hand a bracket 11, firmly attached to the mudguard 3 in the protruding portion 9 of the mudguard 3, on the side of the mudguard 3 facing the wheel 1. On the other hand, the mudguard fixation device 8 comprises an arm securing member in the form of a spacer 12 configured to secure the arm 6 in one of two predefined mudguard fixation positions within the bracket 11.

The bracket 11 is formed with two elongated portions 13, 14, of which a first one 13 extends essentially vertically and a second one 14 extends at an angle with respect to the first one 13. Both elongated portions 13, 14 are adapted to contact an inner surface of the protruding portion 9 of the mudguard 3 and to be attached thereto by means of e.g. screws. A corner portion 15 of the bracket 11 is located between said elongated portions 13, 14. The corner portion 15 is configured to rest against the outer section 6b of the arm 6 in a lower mudguard fixation position shown in fig. 4b. The bracket 11 is further formed with a shelf 16 protruding laterally from the first elongated portion 13, below the corner portion 15. The shelf 16 is configured to receive the arm 6 in an upper mudguard fixation position shown in fig 4a. The two predefined mudguard fixation positions are thus both located between the shelf 16 and the corner portion 15.

The spacer 12 is configured to be fitted between the protruding shelf 16 and the corner portion 15 of the bracket 11 and occupy the space between the shelf 16 and the corner portion 15 that is not occupied by the arm 6. In the embodiment shown in figs. 4a-b, the spacer is S-shaped so that it, together with the bracket 11, embraces the perimeter of the arm 6. When switching mudguard fixation positions, the orientation of the spacer 12 is changed. Fastening members are used to fasten the arm 6 and the spacer 12 to the bracket, here in the form of two laterally extending screws 17. Holes are for this purpose provided in the arm 6, such that one of the screws 17 can extend through the arm 6.

Figs. 5a-b show the mudguard fixation device 8 according to a second embodiment of the invention. For ease of reference, the same reference numbers as above will be used to refer to features corresponding to those shown in figs. 4a-b. As in the first embodiment, the mudguard fixation device 8 comprises a bracket 11 and an arm securing member in the form of a spacer 12 configured to secure the outer section 6b of the arm 6 in one of two predefined mudguard fixation positions within the bracket 11, provided between a protruding shelf 16 and a corner portion 15 of the bracket 11. The mudguard fixation device 8 differs from the mudguard fixation device 8 according to the first embodiment in the design of the shelf 16 and the spacer 12, and in that only one vertically extending fastening member in the form of a screw 17 is used to secure the arm 6 with respect to the bracket 11. Also in this embodiment, the arm 6 is provided with receiving holes. The upper mudguard fixation position is shown in fig. 5a and the lower mudguard fixation position is shown in fig. 5b.

Preferably, the mudguard fixation device 8 is configured so that the arm 6 and the spacer 12 can be removed from the bracket 11 without removing the bracket 11 from the mudguard 3.

The arm attachment device 7 configured to attach the arm 6 to the frame 5 of the motor vehicle is shown in greater detail in fig. 6a, showing the arm 6 in an upper arm position, and fig. 6b, showing the arm 6 in a lower arm position. The arm attachment device 7 comprises a frame attachment member 18 configured to be firmly attached to the frame 5 by means of e.g. screws and protruding laterally from the frame 5, and an arm connector 19 configured to connect the arm 6 to the frame attachment member 18 in one of the upper arm position and the lower arm position. The arm connector 19 is here fastened to the frame attachment member 18 by a first set of screws 20, and to the arm 6 by a second set of screws 21. In order to switch from the upper arm position to the lower arm position, both sets of screws 20, 21 are released and the arm connector 19 is rotated 180° with respect to the frame attachment member 18. Thus, the arm connector 19 can be fastened to the frame attachment member 18 in two different predefined connector positions, each corresponding to one of the upper arm position and the lower arm position. The frame attachment member 18 can remain fixed to the frame 5 during switching between the upper arm position and the lower arm position. In an alternative embodiment, it is possible to use a clamp or similar fastening means to hold the arm 6 in the arm connector, instead of the second set of screws 21.

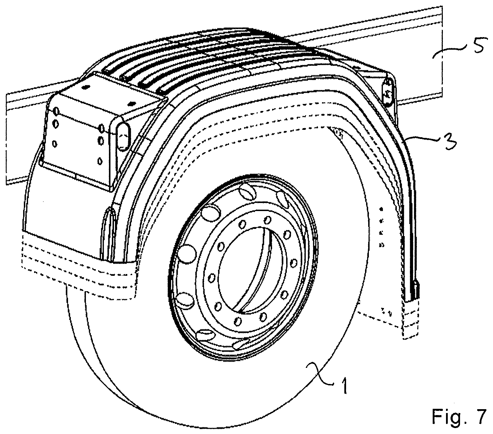

Fig. 7 shows the four different available predefined positions in which the mudguard 3 can be mounted with respect to the frame 5 of the vehicle. The position shown with solid lines is the uppermost position, which is obtained by connecting the arm 6 to the frame attachment member 18 in the upper arm position and by securing the arm 6 in the upper mudguard fixation position within the bracket 11. In this position, the largest clearance is provided between the wheel 1 and the mudguard 3. The other available predefined positions are shown with dashed lines.

## Claims

1. An attachment assembly (4) for mounting a mudguard (3) on a frame (5) of a motor vehicle, such that the mudguard (3) is positioned vertically above a wheel (1) of the motor vehicle, comprising
- an arm (6) extending between the frame (5) of the motor vehicle and the mudguard (3),
- an arm attachment device (7) configured to attach the arm (6) to the frame (5) of the motor vehicle in one of at least two available arm positions, wherein said arm positions are at vertically different levels with respect to the frame (5), and wherein the arm attachment device (7) comprises:
∘ a frame attachment member (18) configured to be firmly attached to the frame (5) of the vehicle, and
∘ an arm connector (19) for connecting the arm (6) to the frame attachment member (18) in one of said at least two available arm positions, wherein the arm connector (19) is configured to be secured to the frame attachment member (18) in one of at least two predefined connector positions, each connector position corresponding to one of said arm positions,
- at least one mudguard fixation device (8) configured to attach the mudguard (3) to the arm (6),
**characterised in**
**that** the mudguard fixation device (8) is configured to attach the mudguard (3) to the arm (6) in one of at least two predefined mudguard fixation positions, wherein the predefined mudguard fixation positions are at vertically different levels with respect to the arm (6), and
**that** said predefined connector positions correspond to different orientations of the arm connector (19) with respect to the frame attachment member (18).

2. The attachment assembly according to claim 1, wherein the mudguard fixation device (8) comprises
- a bracket (11) configured to be firmly attached to the mudguard (3), and
- an arm securing member configured to secure the arm (6) in one of said at least two mudguard fixation positions within the bracket (11).

3. The attachment assembly according to claim 2, wherein the bracket (11) comprises two elongated portions (13, 14) extending at an angle with respect to one another, and a corner portion (15) located between said elongated portions (13, 14), wherein the corner portion (15) is configured to receive the arm (6) in one of said at least two mudguard fixation positions.

4. The attachment assembly according to claim 2 or 3, wherein the bracket (11) comprises at least one protruding shelf (16) configured to receive the arm (6) in one of said at least two mudguard fixation positions.

5. The attachment assembly according to claim 4 in combination with claim 3, wherein the arm securing member is in the form of a spacer (12) configured to, together with the arm (6), be fitted between the protruding shelf (16) and the corner portion (15) of the bracket (11).

6. The attachment assembly according to any one of the preceding claims, wherein the arm (6) is curved and has two sections (6a, 6b) extending in parallel or essentially in parallel, and a mid-section (6c) connecting said two sections (6a, 6b) and extending at an angle with respect to said sections (6a, 6b).

7. The attachment assembly according to any one of the preceding claims, wherein the arm (6) has the same orientation when held in the at least two different arm positions.

8. The attachment assembly according to any one of the preceding claims, wherein the arm (6), when mounted, is configured to extend away from the frame (5) in a lateral direction, so that the at least one mudguard fixation device (8) is laterally spaced apart from the arm attachment device (7).

9. The attachment assembly according to claim 8, wherein the arm (6) is configured to be received in said at least one mudguard fixation device (8) in one of at least two laterally spaced apart predefined receiving positions.

10. The attachment assembly according to any one of the preceding claims, comprising at least two mudguard fixation devices (8).

11. A mudguard assembly (2) comprising a mudguard (3) and at least two attachment assemblies (4) according to any one of the preceding claims.

12. A motor vehicle comprising a mudguard assembly (2) according to claim 11.

## Patentansprüche

1. Befestigungsanordnung (4) zur Anbringung eines Kotflügels (3) an einem Rahmen (5) eines Kraftfahrzeugs solchermaßen, dass der Kotflügel (3) vertikal oberhalb eines Rads (1) des Kraftfahrzeugs angeordnet ist, mit
- einem Arm (6), der sich zwischen dem Rahmen (5) des Kraftfahrzeugs und dem Kotflügel (3) erstreckt,
- einer Armbefestigungseinrichtung (7), die dazu ausgebildet ist, den Arm (6) an dem Rahmen (5) des Kraftfahrzeugs in einer von zumindest zwei verfügbaren Armstellungen anzubringen, wobei die Armstellungen sich bezüglich des Rahmens (5) auf vertikal unterschiedlichen Höhen befinden und wobei die Armbefestigungseinrichtung (7) aufweist:
o ein Rahmenanbringungsbauteil (18), das dazu ausgebildet ist, fest an dem Rahmen (5) des Fahrzeugs angebracht zu werden, und
o einen Armverbinder (19) zum Verbinden des Arms (6) mit dem Rahmenanbringungsbauteil (18) in einer der zumindest zwei verfügbaren Armstellungen, wobei der Armverbinder (19) dazu ausgeführt ist, an dem Rahmenanbringungsbauteil (18) in einer von wenigstens zwei vordefinierten Verbinderstellungen befestigt zu werden, wobei jede Verbinderstellung einer der Armstellungen entspricht,
- wenigstens einer Kotflügelbefestigungseinrichtung (8), die dazu eingerichtet ist, den Kotflügel (3) an dem Arm (6) anzubringen,
**dadurch gekennzeichnet,**
**dass** die Kotflügelbefestigungseinrichtung (8) dazu ausgeführt ist, den Kotflügel (3) an dem Arm (6) in einer von wenigstens zwei vordefinierten Kotflügelbefestigungsstellungen anzubringen, wobei die vordefinierten Kotflügelbefestigungsstellen sich bezüglich des Arms (6) auf vertikal unterschiedlichen Höhen befinden, und
**dass** die vordefinierten Verbinderstellungen verschiedenen Ausrichtungen des Armverbinders (19) bezüglich des Rahmenanbringungsbauteils (18) entsprechen.

2. Befestigungsanordnung nach Anspruch 1, bei der die Kotflügelbefestigungseinrichtung (8) aufweist
- eine Halterung (11), die dazu ausgeführt ist, fest an dem Kotflügel (3) angebracht zu werden, und
- ein Armbefestigungsbauteil, das dazu ausgeführt ist, den Arm (6) in einer der wenigstens zwei Kotflügelbefestigungsstellen in der Halterung (11) zu befestigen.

3. Befestigungsanordnung nach Anspruch 2, bei der die Halterung (11) zwei verlängerte Abschnitte (13, 14), die unter einem Winkel in Bezug aufeinander verlaufen, und einen zwischen den verlängerten Abschnitten (13, 14) angeordneten Eckbereich (15) aufweist, wobei der Eckbereich (15) dazu ausgeführt ist, den Arm (6) in einer der wenigstens zwei Kotflügelbefestigungsstellungen aufzunehmen.

4. Befestigungsanordnung nach Anspruch 2 oder 3, bei der die Halterung (11) zumindest ein vorstehendes Bord (16) aufweist, das dazu ausgeführt ist, den Arm (6) in einer der wenigstens zwei Kotflügelbefestigungsstellungen aufzunehmen.

5. Befestigungsanordnung nach Anspruch 4 in Verbindung mit Anspruch 3, bei der das Armbefestigungsbauteil die Form eines Abstandshalters (12) hat, der zusammen mit dem Arm (6) dazu ausgeführt ist, zwischen das vorstehende Bord (16) und den Eckbereich (15) der Halterung (11) zu passen.

6. Befestigungsanordnung nach einem der vorhergehenden Ansprüche, bei der der Arm (6) gekrümmt ist und zwei Abschnitte (6a, 6b), die parallel oder im Wesentlichen parallel verlaufen, und einen Mittelabschnitt (6c) hat, der die zwei Abschnitte (6a, 6b) verbindet und sich unter einem Winkel zu den zwei Abschnitten (6a, 6b) erstreckt.

7. Befestigungsanordnung nach einem der vorhergehenden Ansprüche, bei der der Arm (6) dieselbe Ausrichtung hat, wenn er in den zumindest zwei unterschiedlichen Armstellungen gehalten ist.

8. Befestigungsanordnung nach einem der vorhergehenden Ansprüche, bei der der Arm (6) dann, wenn er montiert ist, dazu ausgeführt ist, sich von dem Rahmen (5) in einer Querrichtung weg zu erstrecken, so dass die wenigstens eine Kotflügelbefestigungseinrichtung (8) seitlich von der Armbefestigungseinrichtung (7) beabstandet ist.

9. Befestigungsanordnung nach Anspruch 8, bei der der Arm (6) dazu ausgeführt ist, in der wenigstens einen Kotflügelbefestigungseinrichtung (8) in einer von zumindest zwei seitlich beabstandeten, vordefinierten Aufnahmepositionen aufgenommen zu werden.

10. Befestigungsanordnung nach einem der vorhergehenden Ansprüche, die mindestens zwei Kotflügelbefestigungseinrichtungen (8) aufweist.

11. Kotflügelanordnung (2) mit einem Kotflügel (3) und mindestens zwei Befestigungsanordnungen (4) nach einem der vorhergehenden Ansprüche.

12. Kraftfahrzeug mit einer Kotflügelanordnung (2) nach Anspruch 11.

## Revendications

1. Ensemble de fixation (4) pour le montage d'un garde-boue (3) sur un châssis (5) d'un véhicule motorisé, de sorte que le garde-boue (3) est positionné verticalement au-dessus d'une roue (1) du véhicule motorisé, comprenant
- un bras (6) s'étendant entre le châssis (5) du véhicule motorisé et le garde-boue (3),
- un dispositif de fixation de bras (7) configuré pour fixer le bras (6) au châssis (5) du véhicule motorisé dans une parmi au moins deux positions de bras disponibles, dans lequel lesdites positions de bras sont à des niveaux verticalement différents par rapport au châssis (5), et dans lequel le dispositif de fixation de bras (7) comprend :
• un élément de fixation de châssis (18) configuré pour être fermement fixé au châssis (5) du véhicule, et
• un connecteur de bras (19) pour la connexion du bras (6) à l'élément de fixation de châssis (18) dans une parmi lesdites au moins deux positions de bras disponibles, dans lequel le connecteur de bras (19) est configuré pour être fixé à l'élément de fixation de châssis (18) dans une parmi au moins deux positions de connecteur prédéfinies, chaque position de connecteur correspondant à l'une desdites positions de bras,
- au moins un dispositif de fixation de garde-boue (8) configuré pour fixer le garde-boue (3) au bras (6), **caractérisée en ce**
**que** le dispositif de fixation de garde-boue (8) est configuré pour fixer le garde-boue (3) au bras (6) dans une parmi au moins deux positions de fixation de garde-boue prédéfinies, dans lequel les positions de fixation de garde-boue prédéfinies sont à des niveaux verticalement différents par rapport au bras (6), et
**que** lesdites positions de connecteur prédéfinies correspondent à différentes orientations du connecteur de bras (19) par rapport à l'élément de fixation de châssis (18).

2. Ensemble de fixation selon la revendication 1, dans lequel le dispositif de fixation de garde-boue (8) comprend
- un support (11) configuré pour être fermement fixé au garde-boue (3), et
- un élément de fixation de bras configuré pour fixer le bras (6) dans une parmi lesdites au moins deux positions de fixation de garde-boue dans le support (11).

3. Ensemble de fixation selon la revendication 2, dans lequel le support (11) comprend deux parties allongées (13, 14) s'étendant à un angle l'une par rapport à l'autre, et une partie d'angle (15) située entre lesdites parties allongées (13, 14), dans lequel la partie d'angle (15) est configurée pour recevoir le bras (6) dans une parmi lesdites au moins deux positions de fixation de garde-boue.

4. Ensemble de fixation selon la revendication 2 ou 3, dans lequel le support (11) comprend au moins un plateau saillant (16) configuré pour recevoir le bras (6) dans une parmi lesdites au moins deux positions de fixation de garde-boue.

5. Ensemble de fixation selon la revendication 4 en combinaison avec la revendication 3, dans lequel l'élément de fixation de bras est sous la forme d'une entretoise (12) configurée pour, conjointement avec le bras (6), être installée entre le plateau saillant (16) et la partie d'angle (15) du support (11).

6. Ensemble de fixation selon l'une quelconque des revendications précédentes, dans lequel le bras (6) est courbé et a deux sections (6a, 6b) s'étendant en parallèle ou essentiellement en parallèle, et une section médiane (6c) reliant lesdites deux sections (6a, 6b) et s'étendant à un angle par rapport auxdites sections (6a, 6b).

7. Ensemble de fixation selon l'une quelconque des revendications précédentes, dans lequel le bras (6) a la même orientation lorsqu'il est maintenu dans les au moins deux positions de bras différentes.

8. Ensemble de fixation selon l'une quelconque des revendications précédentes, dans lequel le bras (6), lorsqu'il est monté, est configuré pour s'étendre à l'écart du châssis (5) dans une direction latérale, de sorte que l'au moins un dispositif de fixation de garde-boue (8) est espacé latéralement du dispositif de fixation de bras (7).

9. Ensemble de fixation selon la revendication 8, dans lequel le bras (6) est configuré pour être reçu dans ledit au moins un dispositif de fixation de garde-boue (8) dans une parmi au moins deux positions de réception prédéfinies espacées latéralement.

10. Ensemble de fixation selon l'une quelconque des revendications précédentes, comprenant au moins deux dispositifs de fixation de garde-boue (8).

11. Ensemble de garde-boue (2) comprenant un garde-boue (3) et au moins deux ensembles de fixation (4) selon l'une quelconque des revendications précédentes.

12. Véhicule motorisé comprenant un ensemble de garde-boue (2) selon la revendication 11.
